# EUROPÄISCHE PATENTSCHRIFT

(11) **EP 2 174 047 B1**
(45) Veröffentlichungstag und Bekanntmachung des Hinweises auf die Patenterteilung: **17.10.2012**
(21) Anmeldenummer: 08786057.3
(22) Anmeldetag: 11.07.2008
(51) Int. Cl.: F16K 31/122

(54) **VENTIL**
VALVE
SOUPAPE

(30) Priorität: 11.07.2007 DE 102007032639
(43) Veröffentlichungstag der Anmeldung: 14.04.2010
(73) Patentinhaber: Siemens Aktiengesellschaft, 80333 München (DE)
(72) Erfinder: MEINHOF, Andre-Heinrich, 76287 Rheinstetten (DE); STEINKE, Armin, 76275 Ettlingen (DE)
(86) Internationale Anmeldenummer: PCT/EP2008/059057
(87) Internationale Veröffentlichungsnummer: WO 2009/007442

(56) Entgegenhaltungen:
- CH-A- 239 080
- CH-A- 333 301
- DE-A1- 2 649 520
- DE-B- 1 032 993
- DE-U1- 9 212 162

## Beschreibung

Die Erfindung betrifft ein Ventil nach dem Oberbegriff des Anspruchs 1 beziehungsweise 2, mit wenigstens einer Ventilkammer, welche eine erste Öffnung zur Zuführung eines Mediums und eine als Ventilsitz ausgebildete zweite Öffnung aufweist, welche mittels eines Ventilkörpers verschließbar ist, welcher mit einer in Schließrichtung wirkenden, von einem eine Federkonstante aufweisenden Kraftspeicher erzeugten Federkraft beaufschlagt ist und mittels eines Stellgliedes, auf welches an einer Wirkstelle eine gegen die Federkraft wirkende Stellkraft aufbringbar ist, gegen die Federkraft verstellbar ist, wobei Mittel vorhanden sind, mittels der die an der Wirkstelle der Stellkraft wirksame Federkonstante einstellbar ist.

Ein derartiges Ventil ist beispielsweise aus der DE 33 10 271 A1 bekannt. Das bekannte Ventil wird in vielfältiger Weise verwendet. Insbesondere wird ein derartiges Ventil in einem Stellungsregler zur Betätigung eines Prozessventils verwendet. Mittels des Stellungsreglers, der häufig als elektropneumatischer Stellungsregler ausgebildet ist, wird die Stellung beziehungsweise Bewegung des Antriebs des Prozessventils beeinflusst. Dies geschieht dadurch, dass in eine Kammer, in welcher eine mit dem Ventilkörper des Prozessventils verbundene Membran angeordnet ist, Luft eingeleitet wird. In Abhängigkeit des hierdurch in der Kammer erzeugten Drucks verstellt sich die Membran und damit der Ventilkörper des Prozessventils.

Da zum Antrieb großer Prozessventile auch entsprechend große Kammern verwendet werden, müssen Stellungsregler für große Prozessventile einen großen Luft-Durchfluss gewährleisten, um kurze Reaktionszeiten zu erreichen.

Ein großer Luft-Durchfluss ist aber bei Stellungsreglern für kleine Prozessventile, welche kleine Kammern haben, ungünstig, da die entsprechend benötigten kleinen Luftmengen zum Verstellen der Membran mit Stellungsreglern mit einem großen Luft-Durchfluss nur sehr schwer einstellbar sind. Mit anderen Worten, die Kennlinie des Stellungsreglers beziehungsweise des im Stellungsregler verwendeten Ventils ist zu steil. Ist der Luft-Durchfluss eines Stellungsreglers im Verhältnis zur Größe der Kammer des Prozessventilantriebs zu groß, kann es sogar zum Schwingen des Systems führen.

Es ist bekannt, den Luft-Durchfluss mittels einstellbarer Drosseln zu begrenzen. Die Begrenzung des Luft-Durchflusses mittels einstellbarer Drosseln hat sich jedoch als unbefriedigend herausgestellt. Da durch die Drossel lediglich der maximale Luft-Durchfluss begrenzt wird, wirken sich Änderungen der Stellung des Stellungsreglers nämlich nahezu nicht aus, wenn sich der Luft-Durchfluss in der Begrenzung befindet, und nahezu unverändert aus, wenn sich der Luft-Durchfluss unterhalb der Begrenzung befindet. Das heißt, bei Luft-Durchflüssen unterhalb der Begrenzung kann kaum eine Verhaltensänderung des Stellungsreglers festgestellt werden. Die Kennlinie des Stellungsreglers lässt sich somit durch eine Drossel im Wesentlichen nicht verändern.

Um eine ordnungsgemäße Funktion der Steuerung des Prozessventils gewährleisten zu können, muss daher der Stellungsregler an das Prozessventil angepasst werden. Das heißt, der Luft-Durchfluss beziehungsweise die Kennlinie des Stellungsreglers muss an das Volumen der Kammer, in der sich die Membran zur Einstellung des Ventilkörpers des Prozessventils befindet, angepasst werden. Dies ist sehr nachteilig, da hierdurch eine Vielzahl unterschiedlicher Stellungsregler verwendet werden müssen, was naturgemäß auch die Herstellung einer Vielzahl unterschiedlicher Stellungsregler bedingt. Dass letzteres ebenfalls sehr nachteilig ist, liegt auf der Hand.

Aus der DE 1 032 993 A ist ein thermostatisch gesteuertes Ventil mit allen Merkmalen des Oberbegriffs des Anspruchs 1 beziehungsweise 2 bekannt, bei dem zwischen dem Stellglied und dem Kraftspeicher eine um eine gedachte Schwenkachse schwenkbare Wippe angeordnet ist und der Kraftspeicher längs der Wippe verstellbar ist.

Des Weiteren ist aus der DE 30 10 199 A1 ein fluiddruckbetätigter Regler mit einem Ventil mit allen Merkmalen des Oberbegriffs des Anspruchs 1 beziehungsweise 2 bekannt, bei dem zwischen dem Stellglied und dem Kraftspeicher eine um eine gedachte Schwenkachse schwenkbare Wippe angeordnet ist und die Schwenkachse längs der Wippe verstellbar ist.

Darüber hinaus ist aus der DE 2 649 520 A1 ein weiteres Ventil mit allen Merkmalen des Oberbegriffs des Anspruchs 1 beziehungsweise 2 bekannt.

Es ist Aufgabe der Erfindung, ein eingangs genanntes Ventil derart auszubilden, dass sich seine Kennlinie auf einfache Weise verändern lässt.

Die Lösung dieser Aufgabe ergibt sich aus den Merkmalen des kennzeichnenden Teils des Anspruchs 1 bezichungsweise 2. Vorteilhafte Weiterbildungen der Erfindung ergeben sich aus den Unteransprüchen.

Gemäß der Erfindung ist ein Ventil mit wenigstens einer Ventilkammer, welche eine Einlassöffnung zur Zuführung eines Mediums und eine vorzugsweise als Ventilsitz ausgebildete Ventilöffnung aufweist, welche mittels eines Ventilkörpers verschließbar ist, welcher mit einer in Schließrichtung wirkenden, von einem eine Federkonstante aufweisenden Kraftspeicher erzeugten Federkraft beaufschlagt ist und mittels eines Stellgliedes, auf welches an einer Wirkstelle eine gegen die Federkraft wirkende Stellkraft aufbringbar ist, gegen die Federkraft verstellbar ist, wobei Mittel vorhanden sind, mittels der die an der Wirkstelle der Stellkraft wirksame Federkonstante einstellbar ist, dadurch gekennzeichnet, dass der Kraftspeicher als Blattfeder ausgebildet ist, welche einseitig eingespannt ist und an ihrem der Einspannstelle gegenüberliegenden Ende den Ventilkörper mit Kraft beaufschlagt, wobei der Abstand zwischen der Einspannstelle und der Stelle, an der die Blattfeder den Ventilkörper mit Kraft beaufschlagt, einstellbar ist.

Des Weiteren ist gemäß der Erfindung ein Ventil mit wenigstens einer Ventilkammer, welche eine Einlassöffnung zur Zuführung eines Mediums und eine vorzugsweise als Ventilsitz ausgebildete Ventilöffnung aufweist, welche mittels eines Ventilkörpers verschließbar ist, welcher mit einer in Schließrichtung wirkenden, von einem eine Federkonstante aufweisenden Kraftspeicher erzeugten Federkraft beaufschlagt ist und mittels eines Stellgliedes, auf welches an einer Wirkstelle eine gegen die Federkraft wirkende Stellkraft aufbringbar ist, gegen die Federkraft verstellbar ist, wobei Mittel vorhanden sind, mittels der die an der Wirkstelle der Stellkraft wirksame Federkonstante einstellbar ist, dadurch gekennzeichnet, dass der Kraftspeicher als Blattfeder ausgebildet ist, welche in ihrem mittleren Bereich an einer Auflagestelle auf einem Lager aufliegt und an einem Ende gegen ein Gegenlager stößt sowie an ihrem dem Gegenlager gegenüberliegenden Ende den Ventilkörper mit Kraft beaufschlagt, wobei das Gegenlager längs der Blattfeder verstellbar ist.

Dadurch, dass Mittel vorhanden sind, mittels der die an der Wirkstelle der Stellkraft wirksame Federkonstante einstellbar ist, lässt sich auf einfache Weise die Kennlinie des Ventils verändern. Denn die Kennlinie des Ventils hängt direkt von der am Stellglied des Ventils wirksamen Federkonstante ab.

Ist die am Stellglied des Ventils wirksame Federkonstante groß, muss zur Verstellung des Ventilkörpers eine große Kraft aufgewandt werden. Dies bedeutet, dass geringe Kraftänderungen nur eine geringe Verstellung des Ventilkörpers bewirken. Die Kennlinie des Ventils hat somit eine geringe Steigung. Ist die am Stellglied des Ventils wirksame Federkonstante jedoch klein, braucht zur Verstellung des Ventilkörpers nur eine geringe Kraft aufgewandt zu werden. Dies hat zur Folge, dass geringe Kraftänderungen eine relativ große Verstellung des Ventilkörpers bewirken. Die Kennlinie ist somit steil.

Das Stellglied des Ventils kann ein mit dem Ventilkörper verbundener Stößel sein, an dessen dem Ventilkörper abgewandten Ende sich die Wirkstelle befindet an der die Stellkraft aufgebracht wird. Das Aufbringen der Stellkraft kann mittels eines beliebigen Erzeugungs- beziehungsweise Übertragungsmittels erfolgen. Insbesondere kann die Erzeugung der Kraft mittels eines in einem Zylinder angeordneten Kolbens erfolgen, der mit dem Stößel verbunden ist. Durch Erzeugen eines Drucks in dem Zylinder wird auf den Kolben eine Kraft ausgeübt, die er an den Stößel weitergibt. Durch Verändern der dem in dem Zylinder herrschenden Druck ausgesetzten Kolbenoberfläche lässt sich das Verhältnis von dem in dem Zylinder herrschenden Druck zu der auf den Kolben wirkenden Kraft einstellen. Nimmt man den in dem Zylinder herrschenden Druck als Eingangsgröße des Ventils, lässt sich durch Veränderung der Fläche des Kolbens, die dem in dem Zylinder herrschenden Druck ausgesetzt ist, die Kennlinie des Ventils verändern. Die wirksame Federkonstante definiert sich somit als Verhältnis der Änderung des in dem Zylinder herrschenden Drucks zum zurückgelegten Weg des Ventilkörpers.

Sehr vorteilhaft ist es, dass der Kraftspeicher als Blattfeder ausgebildet ist, welche einseitig eingespannt ist und an ihrem der Einspannstelle gegenüberliegenden Ende den Ventilkörper mit Kraft beaufschlagt, wobei der Abstand zwischen der Einspannstelle und der Stelle, an der die Blattfeder den Ventilkörper mit Kraft beaufschlagt, das heißt dem Angriffspunkt der Kraft, einstellbar ist. In vorteilhafter Weise ist die Blattfeder in einem verschiebbaren Block angeordnet, wodurch sich der Abstand auf einfache Weise verändern lässt. Eine derartige Ausführungsform lässt sich besonders leicht herstellen.

In vorteilhafter Weise lässt sich die Kennlinie des Ventils aber auch dadurch einstellen, dass der Kraftspeicher als Blattfeder ausgebildet ist, welche in ihrem mittleren Bereich an einer Auflagestelle auf einem Lager aufliegt und an einem ihrer Enden gegen ein Gegenlager stößt sowie an ihrem dem Gegenlager gegenüberliegenden Ende den Ventilkörper mit Kraft beaufschlagt, wobei das Gegenlager längs der Blattfeder verstellbar ist. Ist der Abstand des Angriffspunkts des Gegenlagers auf die Blattfeder von der Auflagestelle der Blattfeder auf dem Lager groß, ist die am Ventilkörper wirksame Federkonstante klein. Ist der Abstand klein, ist die Federkonstante groß.

Die Federkonstante lässt sich bei einer Ausführungsform der Erfindung, bei der der Kraftspeicher als Blattfeder ausgebildet ist, welche in ihrem mittleren Bereich an einer Auflagestelle auf einem Lager aufliegt und an einem ihrer Enden gegen ein Gegenlager stößt sowie an ihrem dem Gegenlager gegenüberliegenden Ende den Ventilkörper mit Kraft beaufschlagt, auch dadurch einstellen, dass die Auflagestelle längs der Blattfeder verstellbar ist. Durch die Verstellung der Auflagestelle längs der Blattfeder lässt sich auf einfache Weise die auf den Ventilkörper wirkende Federkonstante einstellen. Denn das Verhältnis der auf die Blattfeder ausgeübten Kraft zur Durchbiegung der Blattfeder, das heißt die Federkonstante, hängt vom Abstand der Stelle, an der der Ventilkörper von der Blattfeder mit Kraft beaufschlagt wird, das heißt vom Abstand des Angriffspunkts der Kraft, zu der Auflagestelle der Blattfeder ab. Ist der Abstand gering, ist die am Ventilkörper wirksame Federkonstante groß. Ist der Abstand groß, ist die Federkonstante klein.

Bei einer starren Verbindung des Ventilkörpers mit dem Stellglied ist die auf den Ventilkörper wirkende Federkonstante auch an der Wirkstelle des Stellglieds wirksam. Daher lässt sich die an der Wirkstelle des Stellglieds wirksame Federkonstante durch eine Verstellung der Auflagestelle der Blattfeder auf dem Lager längs der Blattfeder einstellen.

Die Verstellung des Gegenlagers kann anstatt einer Verstellung der Auflagestelle der Blattfeder auf dem Lager erfolgen oder zusätzlich. Erfolgt sie zusätzlich, lässt sich die auf den Ventilkörper wirkende Federkonstante und somit die an der Wirkstelle der Stellkraft wirksame Federkonstante über einen weiten Bereich sehr genau einstellen.

In vorteilhafter Weise ist das Lager und/oder das Gegenlager auf einer schiefen Ebene angeordnet. Hierdurch lässt sich gegebenenfalls eine durch die Verstellung des Lagers und/oder des Gegenlagers hervorgerufene Veränderung der auf den Ventilkörper in seiner Ruhestellung wirkenden Kraft kompensieren. Des Weiteren können hierdurch auch Nichtlinearitäten ausgeglichen werden.

Bei einer weiteren Ausführungsform der Erfindung ist vorgesehen, dass sich die Breite der Blattfeder längs der Blattfeder verändert. Die Veränderung der Breite der Blattfeder kann linear oder beispielsweise nach einer parabolischen oder hyperbolischen Funktion erfolgen. Auch hierdurch lassen sich bei der Verstellung des Lagers oder des Gegenlagers hervorgerufene Nichtlinearitäten kompensieren. Es kann zudem ein gewünschter Verlauf der Federkonstante eingestellt werden.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnungen.

Es zeigen
- Figur 1: eine erste Ausführungsform eines erfindungsgemäß ausgebildeten Ventils in schematischer Darstellung,
- Figur 2: eine zweite Ausführungsform eines erfindungsgemäß ausgebildeten Ventils in schematischer Darstellung und
- Figur 3: eine Anordnung mit vier erfindungsgemäß ausgebildeten Ventilen in schematischer Darstellung.

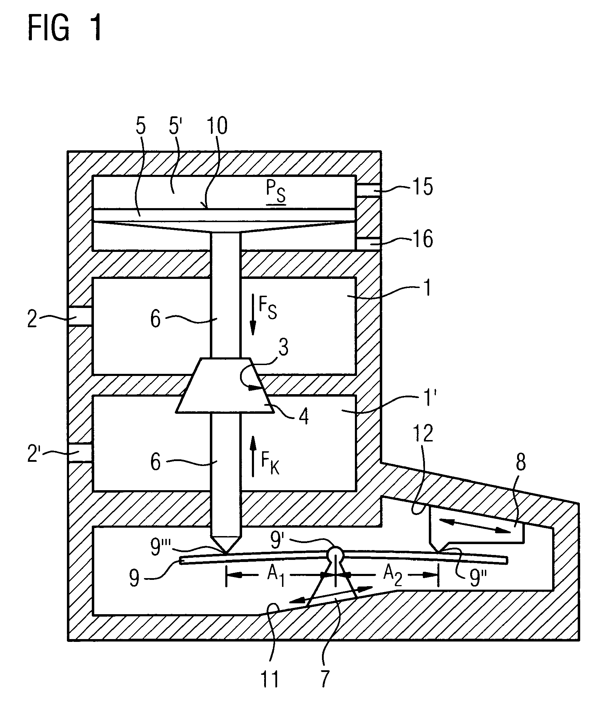

Wie Figur 1 entnommen werden kann, weist ein Ventil eine erste Ventilkammer 1 auf, welcher mittels einer Einlassöffnung 2 ein Medium wie beispielsweise Druckluft zuführbar ist. Die erste Ventilkammer 1 ist über eine Ventilöffnung 3 mit einer zweiten Ventilkammer 1' verbunden. Die Ventilöffnung 3 ist mittels eines Ventilkörpers 4, welcher auf einem Stößel 6 angeordnet ist, verschließbar.

An dem in der Figur unteren Ende ist der Stößel 6 mit einer Federkraft F_{K} beaufschlagt, welche von einer Blattfeder 9 erzeugt wird. Die Blattfeder 9 liegt in ihrem mittleren Bereich an einer Auflagestelle 9' auf einem Auflager 7 auf. Das Auflager 7 ist auf einer ersten schiefen Ebene 11 angeordnet, längs welcher es verstellbar ist. An dem dem Stößel 6 abgewandten Ende stößt die Blattfeder 9 an einer Stoßstelle 9" gegen ein als Loselager ausgebildetes Gegenlager 8.

Die aus Blattfeder 9, Auflager 7 und Gegenlager 8 bestehende Anordnung ist so ausgebildet, dass die Blattfeder 9 den Stößel 6 mit einer Grundkraft beaufschlagt, wenn er sich in seiner Ruheposition, in der er die Ventilöffnung 3 verschließt, befindet. Das Gegenlager 8 ist auf einer zweiten schiefen Ebene 12 angeordnet, längs der es verstellbar ist.

An dem der Blattfeder 9 abgewandten Ende ist der Stößel 6 mit einem Kolben 5 verbunden, welcher in einem Zylinder 5' angeordnet ist. Der Zylinder 5' weist eine Steueröffnung 15 auf, mittels welcher er mit Druckluft befüllbar ist, das heißt, mittels welcher die Kolbenfläche 10 mit Druck beaufschlagbar ist. Der Zylinder 5' weist des Weiteren eine Entlüftungsöffnung 16 auf, durch welche bei einer Bewegung des Kolbens 5 Luft aus dem betreffenden Teil des Zylinders 5' entweichen kann.

Durch Einleiten von Pressluft mit einem bestimmten Druck P_{S} durch die Steueröffnung 15 in den Zylinder 5' wird die Kolbenfläche 10 des Kolbens 5 mit dem betreffenden Druck P_{S} beaufschlagt. Hierdurch wirkt auf den Stößel 6 eine Stellkraft F_{S}, welche der Federkraft F_{K} entgegenwirkt. Ist die Stellkraft F_{S} größer als die Federkraft F_{K}, lässt sich der Ventilkörper 4 aus seiner Ruhestellung in eine Arbeitsstellung verstellen. Die Arbeitsstellung des Ventilkörpers 4 hängt von dem im Zylinder 5' herrschenden Druck P_{S} ab. Sie ist dann erreicht, wenn zwischen der auf den Stößel 6 am oberen Ende wirkenden Steuerkraft F_{S} und der auf den Stößel 6 wirkenden Federkraft F_{K} Gleichgewicht herrscht. Dabei werden die aufgrund der Druckverhältnisse in den Ventilkammern 1 und 1' auf die freien Oberflächen des Ventilkörpers 4 wirkenden Kräfte vernachlässigt.

Das heißt, der Verstellweg des Ventilkörpers 4 ist so groß, dass die durch ihn aufgrund der Federkonstante der Blattfeder 9 hervorgerufene Federkraft F_{K} der Stellkraft F_{S} entspricht. Da zwischen dem im Zylinder 5' herrschenden Steuerdruck P_{S} und der durch ihn hervorgerufenen Stellkraft F_{S} ein linearer Zusammenhang besteht, besteht zwischen dem Steuerdruck P_{S} und dem Verstellweg des Ventilkörpers 4 ebenfalls ein linearer Zusammenhang, dessen Proportionalitätsfaktor der durch die Blattfeder 9 hervorgerufenen Federkonstanten entspricht.

In der in Figur 1 gezeigten Stellung des Auflagers 7 und des Gegenlagers 8 ist der Abstand A₁ der Angriffsstelle 9"' des Stößels 6, an der der Stößel 6 mit der Blattfeder 9 in Wirkverbindung steht, von der Auflagestelle 9' der Blattfeder 9, an der die Blattfeder in Wirkverbindung mit dem Auflager 7 steht, etwa genauso groß wie der Abstand A₂ der Stoßstelle 9" des Gegenlagers 8, an der die Blattfeder 9 in Wirkverbindung mit dem Gegenlager 8 steht, von der Auflagestelle 9' der Blattfeder 9. Hierdurch stellt sich dem im Zylinder 5' herrschenden Steuerdruck P_{S} eine Kraft mit einer entsprechenden ersten Federkonstante entgegen.

Durch Verschieben des Auflagers 7 und damit der Auflagestelle 9' längs der Blattfeder 9 lassen sich die Abstände A₁, A₂ verändern, wodurch sich die an der Angriffsstelle 9"' des Stößels 6 wirksame Federkonstante verändert, was zur Folge hat, dass sich die der Stellkraft F_{S} und damit dem im Zylinder 5' herrschenden Steuerdruck P_{S} entgegenwirkende Federkonstante verändert.

Die an der Angriffsstelle 9"' des Stößels 6 vorhandene Federkonstante lässt sich auch dadurch verändern, dass das Gegenlager 8 längs der Blattfeder 9 verschoben wird. Denn dadurch verändert sich der Abstand A₂ der Stoßstelle 9" des Gegenlagers 8 auf der Blattfeder 9 von der Auflagestelle 9' der Blattfeder 9 auf dem Auflager 7.

Durch die erste schiefe Ebene 11, längs der das Auflager 7 verschiebbar ist, sowie die zweite schiefe Ebene 12, auf der das Gegenlager 8 verschiebbar ist, kann erreicht werden, dass die in Ruhestellung des Ventilkörpers 4 auf den Ventilkörper 4 wirkende Federkraft F_{K} trotz Veränderung der Federkonstante unverändert bleibt.

Befindet sich der Ventilkörper 4 in einer Arbeitsstellung, gelangt das der ersten Ventilkammer 1 über die Einlassöffnung 2 zugeführte Medium durch die Ventilöffnungen 3 in die zweite Ventilkammer 1' und kann über die Auslassöffnung 2' seiner weiteren Verwendung zugeführt werden. Die Menge des über die Auslassöffnung 2' zur Verfügung gestellten Mediums hängt von der Größe der Ventilöffnung 3, das heißt der Stellung des Ventilkörpers 4 ab. Da die Stellung des Ventilkörpers 4 vom im Zylinder 5' herrschenden Steuerdruck P_{S} abhängt, hängt die Menge des mittels der Auslassöffnung 2' pro Zeiteinheit zur Verfügung gestellten Mediums vom Steuerdruck P_{S} ab.

Ist die an der Angriffsstelle 9"' der Blattfeder 9 an dem Stößel 6 wirksame Federkonstante klein, muss zur Verstellung des Ventilkörpers 4 um einen vorbestimmten Weg eine relativ geringe Stellkraft F_{S}, das heißt ein relativ geringer Steuerdruck P_{S}, aufgebracht werden. Das Ventil hat daher eine relativ steile Kennlinie. Ist die an der Angriffsstelle 9"' der Blattfeder 9 am Stößel 6 wirksame Federkonstante groß, muss zur Erreichung derselben Verstellung des Ventilkörpers 4 eine relativ große Kraft F_{S}, das heißt ein relativ großer Steuerdruck P_{S}, aufgebracht zu werden. Die Kennlinie des Ventils verläuft daher relativ flach. Da durch Verschieben des Auflagers 7 und/oder Verschieben des Gegenlagers 8 die an der Angriffsstelle 9"' der Blattfeder 9 am Stößel 6 wirksame Federkonstante eingestellt werden kann, kann durch Verschieben des Auflagers 7 und/oder des Gegenlagers 8 die Kennlinie des Ventils eingestellt werden.

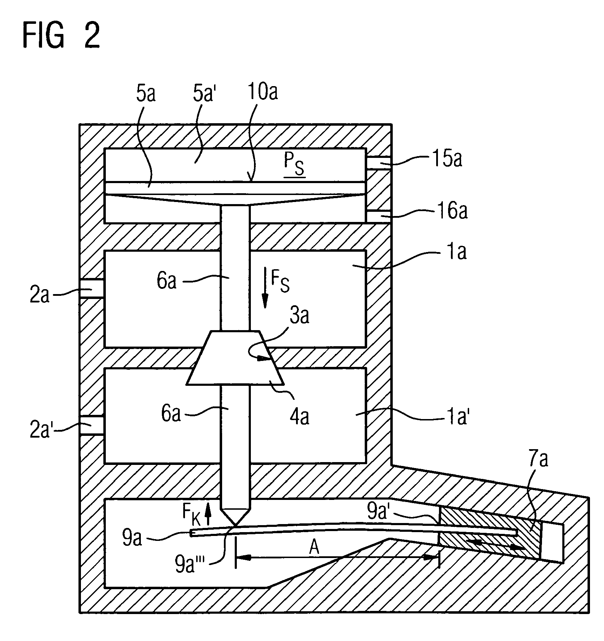

Die in Figur 2 dargestellte Ausführungsform der Erfindung hat im Wesentlichen denselben Aufbau wie die in Figur 1 dargestellte Ausführungsform. Gleiche Elemente sind daher mit denselben Bezugszeichen versehen; zur Unterscheidung weisen sie jedoch zusätzlich den Buchstaben a auf.

Im Gegensatz zu der in Figur 1 dargestellten Ausführungsform ist bei der in Figur 2 dargestellten Ausführungsform die Blattfeder 9a einseitig in einem Block 7a eingespannt. Der Block 7a ist in Längsrichtung der Blattfeder 9a verschiebbar befestigt.

Durch Verschieben des Blocks 7a lässt sich der Abstand A zwischen der Einspannstelle 9a' der Blattfeder 9a in dem Block 7a und der Angriffstelle 9a"' der Blattfeder 9a am Stößel 6a einstellen. Da die an der Angriffsstelle 9a"' der Blattfeder 9a am Stößel 6a wirksame Federkonstante der Blattfeder 9a vom Abstand A der Angriffsstelle 9a"' der Blattfeder 9a am Stößel 6a von der Einspannstelle 9a' der Blattfeder 9a in den Block 7a abhängt, lässt sich somit durch Verschieben des Blocks 7a die Federkonstante einstellen. Der Block 7a ist auf einer schiefen Ebene angeordnet, längs der er verstellbar ist. Hierdurch lässt sich die auf den Ventilkörper 4a in Ruhestellung wirkende Kraft einstellen.

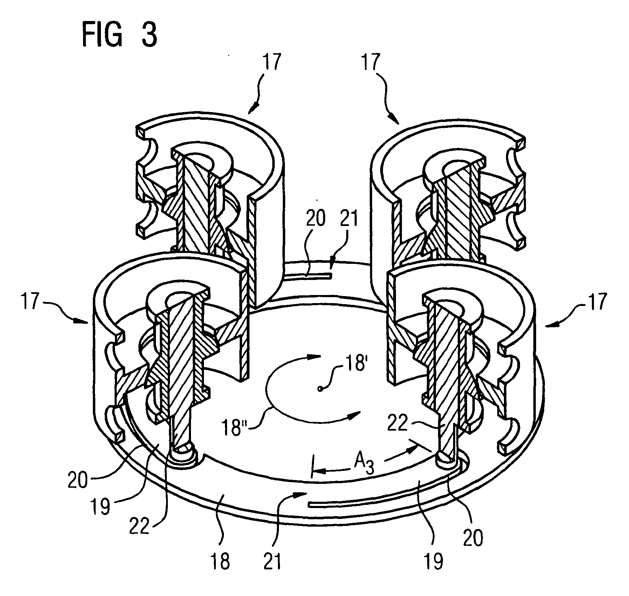

In Figur 3 ist eine schematische Anordnung mit vier erfindungsgemäß ausgebildeten Ventilen 17 dargestellt. Vom Prinzip her entspricht der Aufbau der Ventile 17 im Wesentlichen dem in Figur 2 dargestellten Aufbau.

Wie Figur 3 entnommen werden kann, weist die Anordnung einen aus Federstahl bestehenden, ringförmig ausgebildeten Blechstreifen 18 auf, in welchem mittels Trennspalten 20 Federzungen 19 ausgebildet sind. Oberhalb des Blechstreifens 18 sind die Ventile 17 angeordnet derart, dass ihre Stößel 22 auf die Federzungen 19 stoßen. Durch Drehen des Blechstreifens 18 um einen Mittelpunkt 18' lässt sich der Abstand A₃ der Stellen, an denen die Stößel 22 auf die Federzungen 19 auftreffen, zu den Ursprungsstellen 21 der Federzungen 19, das heißt den Stellen, bis zu denen sich die Trennspalten 20 erstrecken, einstellen. Da sich mit dem Abstand A₃ die auf die Stößel 22 wirkende Federkonstante verändert, lässt sich somit die auf die Stößel 22 wirkende Federkonstante und damit die Kennlinie der Ventile 17 durch Verdrehen des Bleichstreifens 18 einstellen. Die Drehbewegung des Blechstreifens 18 ist durch einen Pfeil 18" angedeutet.

## Patentansprüche

1. Ventil mit wenigstens einer ersten Ventilkammer (1a), welche eine Einlassöffnung (2a) aufweist zur Zuführung eines Mediums und eine Ventilöffnung ( 3a) aufweist, welche mittels eines Ventilkörpers ( 4a) verschließbar ist, welcher mit einer in Schließrichtung wirkenden, von einem eine Federkonstante aufweisenden Kraftspeicher ( 9a) erzeugten Federkraft (F_{K}) beaufschlagt ist und mittels eines Stellgliedes ( 5a), auf welches an einer Wirkstelle ( 10a) eine gegen die Federkraft (F_{K}) wirkende Stellkraft (F_{S}) aufbringbar ist, gegen die Federkraft (F_{K}) verstellbar ist, wobei Mittel ( 7a) vorhanden sind, mittels der die an der Wirkstelle ( 10a) der Stellkraft (F_{S}) wirksame Federkonstante einstellbar ist, **dadurch gekennzeichnet, dass** der Kraftspeicher als Blattfeder (9a) ausgebildet ist, welche einseitig eingespannt ist und an ihrem der Einspannstelle (9a') gegenüberliegenden Ende den Ventilkörper (4a) mit Kraft (F_{K}) beaufschlagt, wobei der Abstand (A) zwischen der Einspannstelle (9a') und der Stelle (9a"), an der die Blattfeder (9a) den Ventilkörper (4a) mit Kraft (F_{K}) beaufschlagt, einstellbar ist.

2. Ventil mit wenigstens einer ersten Ventilkammer (1; 1a), welche eine Einlassöffnung (2 ) aufweist zur Zuführung eines Mediums und eine Ventilöffnung (3 ) aufweist, welche mittels eines Ventilkörpers (4 ) verschließbar ist, welcher mit einer in Schließrichtung wirkenden, von einem eine Federkonstante aufweisenden Kraftspeicher (9 ) erzeugten Federkraft (F_{K}) beaufschlagt ist und mittels eines Stellgliedes (5 ), auf welches an einer Wirkstelle (10 ) eine gegen die Federkraft (F_{K}) wirkende Stellkraft (F_{S}) aufbringbar ist, gegen die Federkraft (F_{K}) verstellbar ist, wobei Mittel (7, 8 ) vorhanden sind, mittels der die an der Wirkstelle (10 ) der Stellkraft (F_{S}) wirksame Federkonstante einstellbar ist, **dadurch gekennzeichnet, dass** der Kraftspeicher als Blattfeder (9) ausgebildet ist, welche in ihrem mittleren Bereich an einer Auflagestelle (9') auf einem Lager (7) aufliegt und an einem Ende gegen ein Gegenlager (8) stößt sowie an ihrem dem Gegenlager (8) gegenüberliegenden Ende den Ventilkörper (4) mit Kraft (F_{K}) beaufschlagt, wobei das Gegenlager (8) längs der Blattfeder (9) verstellbar ist.

3. Ventil nach Anspruch 2, **dadurch gekennzeichnet, dass** die Auflagestelle (9') längs der Blattfeder (9) verstellbar ist.

4. Ventil nach Anspruch 2 oder 3, **dadurch gekennzeichnet, dass** das Lager (7) und/oder das Gegenlager (8) auf einer schiefen Ebene (11, 12) angeordnet sind, auf der sie verstellbar sind.

5. Ventil nach einem der Ansprüche 1 bis 4, **dadurch gekennzeichnet, dass** die Breite der Blattfeder (9; 9a) sich längs der Blattfeder (9; 9a) verändert.

## Claims

1. Valve with at least one first valve chamber (1a) which has an inlet opening (2a) for feed of a medium, and has a valve opening (3a) which can be closed off by means of a valve body (4a) which is acted upon by a spring force (F_{K}) which acts in the closing direction and is created by a energy accumulator (9a) which has a spring constant, and which valve body is adjustable against the spring force (F_{K}) by means of an actuating element (5a) upon which an actuating force (F_{S}), which acts against the spring force (F_{K}), can be applied at a point of action (10a), wherein means (7a) are provided by means of which the spring constant, which is effective at the point of action (10a) of the actuating force (F_{S}), is adjustable, **characterized in that** the energy accumulator is formed as a leaf spring (9a) which is clamped on one side and by its end which lies opposite the clamping point (9a') acts with force (F_{K}) upon the valve body (4a), wherein the distance (A) between the clamping point (9a') and the point (9a") at which the leaf spring (9a) acts with force (F_{K}) upon the valve body (4a) is adjustable.

2. Valve with at least one first valve chamber (1; 1a) which has an inlet opening (2) for feed of a medium, and has a valve opening (3) which can be closed off by means of a valve body (4) which is acted upon by a spring force (F_{K}) which acts in the closing direction and is created by a energy accumulator (9) which has a spring constant, and which valve body is adjustable against the spring force (F_{K}) by means of an actuating element (5) upon which an actuating force (F_{S}), which acts against the spring force (F_{K}), can be applied at a point of action (10), wherein means (7, 8) are provided by means of which the spring constant, which is effective at the point of action (10) of the actuating force (F_{S}), is adjustable, **characterized in that** the energy accumulator is formed as a leaf spring (9) which in its center region rests on a support (7) at a support point (9') and by one end abuts against an abutment (8) and also by its end which lies opposite the abutment (8) acts with force (F_{K}) upon the valve body (4), wherein the abutment (8) is adjustable along the leaf spring (9).

3. Valve according to Claim 2, **characterized in that** the support point (9') is adjustable along the leaf spring (9).

4. Valve according to Claim 2 or 3, **characterized in that** the support (7) and/or the abutment (8) are arranged on an inclined plane (11, 12), upon which they are adjustable.

5. Valve according to one of Claims 1 to 4, **characterized in that** the width of the leaf spring (9; 9a) changes along the leaf spring (9; 9a).

## Revendications

1. Soupape ayant au moins une première chambre ( 1a ), qui a une ouverture ( 2a ) d'entrée pour l'apport d'un fluide et une ouverture ( 3a ) de soupape, qui peut être fermée au moyen d'un obturateur ( 4a ), lequel est soumis à une force ( F_{K} ) de ressort agissant dans la direction de fermeture et produite par un accumulateur ( 9a ) de force ayant une constante de ressort et qui peut être déplacé à l'encontre de la force ( F_{K} ) de ressort au moyen d'un actionneur ( 5a ), sur lequel peut être appliquée une force ( F_{S} ) d'actionnement agissant à l'encontre de la force ( F_{K} ) de ressort en un point ( 10a ) d'actionnement, des moyens ( 7a ) étant prévus, à l'aide desquels la constante de ressort agissant sur la force ( F_{S} ) d'actionnement au point ( 10a ) d'actionnement est réglable, **caractérisée en ce que** l'accumulateur de force est constitué sous la forme d'un ressort ( 9a ) à lame, qui est encastré d'un côté et qui, à son extrémité opposée au point ( 9a' ) d'encastrement, soumet l'obturateur ( 4a ) à la force ( F_{K} ), la distance ( A ) entre le point ( 9a' ) d'encastrement et le point ( 9a" ) où le ressort ( 9a ) à lame soumet l'obturateur ( 4a ) à la force ( F_{K} ) étant réglable.

2. Soupape ayant au moins une première chambre ( 1a ), qui a une ouverture ( 2a ) d'entrée pour l'apport d'un fluide et une ouverture ( 3a ) de soupape, qui peut être fermée au moyen d'un obturateur ( 4a ), lequel est soumis à une force ( F_{K} ) de ressort agissant dans la direction de fermeture et produite par un accumulateur ( 9a ) de force ayant une constante de ressort et qui peut être déplacé à l'encontre de la force ( F_{K} ) de ressort au moyen d'un actionneur ( 5a ), sur lequel peut être appliquée une force ( F_{S} ) d'actionnement agissant à l'encontre de la force ( F_{K} ) de ressort en un point ( 10a ) d'actionnement, des moyens ( 7a ) étant prévus, à l'aide desquels la constante de ressort agissant sur la force ( F_{S} ) d'actionnement au point ( 10a ) d'actionnement est réglable, **caractérisée en ce que** l'accumulateur de force est constitué sous la forme d'un ressort ( 9 ) à lame, qui s'applique dans sa partie médiane en un point ( 9' ) d'appui sur un appui ( 7 ) et vient à une extrémité contre un appui ( 8 ) antagoniste, ainsi qu'à son extrémité opposée à l'appui ( 8 ) antagoniste soumet l'obturateur ( 4 ) à une force ( F_{K} ), l'appui ( 8 ) antagoniste pouvant être déplacé le long du ressort ( 9 ) à lame.

3. Soupape suivant la revendication 2, **caractérisée en ce que** le point ( 9' ) d'appui est déplaçable le long du ressort ( 9 ) à lame.

4. Soupape suivant la revendication 2 ou 3, **caractérisée en ce que** l'appui ( 7 ) et/ou l'appui ( 8 ) antagoniste sont placés sur un plan ( 11, 12 ) incliné, sur lequel ils peuvent être déplacés.

5. Soupape suivant l'une des revendications 1 à 4, **caractérisée en ce que** la largeur du ressort ( 9, 9a ) à lame se modifie le long du ressort ( 9, 9a ) à lame.
